# EUROPÄISCHE PATENTSCHRIFT

(11) **EP 1 592 570 B1**
(45) Veröffentlichungstag und Bekanntmachung des Hinweises auf die Patenterteilung: **23.01.2013**
(21) Anmeldenummer: 03767706.9
(22) Anmeldetag: 28.11.2003
(51) Int. Cl.: B60G 3/20, B60G 7/00

(54) **RADAUFHÄNGUNG FÜR KRAFTFAHRZEUGE**
WHEEL SUSPENSION FOR MOTOR VEHICLES
SUSPENSION DE ROUE DESTINEE A DES VEHICULES

(30) Priorität: 05.02.2003 DE 10304567
(43) Veröffentlichungstag der Anmeldung: 09.11.2005
(73) Patentinhaber: AUDI AG, 85045 Ingolstadt (DE)
(72) Erfinder: BRANDL, Hans-Jürgen, 86706 Weichering (DE); KUR, Jaromir, 85051 Ingolstadt (DE)
(74) Vertreter: Asch, Konrad
(86) Internationale Anmeldenummer: PCT/EP2003/013447
(87) Internationale Veröffentlichungsnummer: WO 2004/069567

(56) Entgegenhaltungen:
- EP-A- 0 312 425
- FR-A- 2 730 956
- US-A- 4 744 586
- US-A- 5 499 839
- US-B1- 6 311 962

## Beschreibung

Die Erfindung betrifft eine Radaufhängung für die Räder einer Achse eines Kraftfahrzeuges, insbesondere für die gelenkten Vorderräder, gemäß dem Oberbegriff des Patentanspruches 1.

Die Lenkungsrückstellung bei vorderen Radaufhängungen von Kraftfahrzeugen (Vorderachse) und die Gelenkbelastungen bei hinteren Radaufhängungen (Hinterachse) bestimmen sich u.a. aus der kinematischen Auslegung der Radaufhängungen. Eine gattungsgemäße Radaufhängung zeigt die FR 2730 956, die die Ausgestaltung eines Stabilisators zur Minderung der Wankbewegung eines Fahrzeugs zum Gegenstand hat. Die US 4,744,586 zeigt eine Radaufhängung, mit der die Vor- bzw. Nachspur eingestellt werden kann. So definiert beispielsweise bei Vorderachsen die Neigung der Lenkachse bzw. Spreizachse den Lenkrollradius, den Nachlauf und bei angetriebenen Rädern das sogenannte Maß a, den Störkrafthebelarm für Antriebskräfte in der Radmitte. Sollen diese Parameter zur Vermeidung von Störkräften bei Geradeausfahrt des Kraftfahrzeuges, bei Seitenkräften und/oder beim Beschleunigen oder Bremsen klein gehalten werden, so sind die genannten Parameter entsprechend zu definieren. Dies gelingt insbesondere bei Radaufhängungen mit sogenannten aufgelösten Lenkern bzw. Mehrlenkerachsen, bei denen die Spreizachse virtuell durch entsprechende räumliche Ausrichtung der einzelnen Lenker definierbar ist. Mit der Verminderung der besagten Störkräfte geht aber auch eine Verminderung der Lenkungsrückstellung bzw. eine verminderte kinematische Vorspannung der Radaufhängungsteile einher.

Aufgabe der Erfindung ist es, eine Radaufhängung der gattungsgemäßen Art aufzuzeigen, bei der bei Beibehaltung geringer Störkräfte im Fahrbetrieb mit relativ einfachen Mitteln eine weiter verbesserte Stabilisierung und ggf. Lenkungsrückstellung herstellbar ist.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, in der Radaufhängung federnd nachgiebige Mittel vorzusehen, die den Radträgern mittelbar oder unmittelbar eine um die Spreizachse der Räder und gegensinnig wirkende Vorspannung aufprägen. Damit wird unabhängig von der kinematischen Auslegung der Radaufhängung eine ähnlich einem großen Spreizungswinkel der Spreizachse generierte Vorspannung in der Radaufhängung und den Spurstangen erzeugt, die das Ansprechverhalten und/oder die Geradführung des Kraftfahrzeuges verbessert und ggf. vorhandene, geringfügige Gelenkspiele eliminieren kann. Dies gilt sowohl für gelenkte Räder des Kraftfahrzeuges, als auch bei Mehrlenker-Radaufhängungen für ungelenkte Räder, bei denen einer der einzelnen Lenker ähnlich einer Spurstange zur Erzielung eines definierten Eigenlenkverhaltens der Radaufhängung ausgelegt ist.

Bevorzugt wird ferner vorgeschlagen, dass die federnden Mittel die Räder des Kraftfahrzeuges in Richtung Vorspur vorspannen. Dies ist insbesondere bei angetriebenen Rädern des Kraftfahrzeuges vorteilhaft, obwohl abhängig von der kinematischen Auslegung der Radaufhängung auch eine entgegengesetzte Vorspannung zweckmäßig sein kann.

Des weiteren können die Mittel zusätzlich schwingungsdämpfend wirken, wodurch vorteilhaft eine Doppelfunktion erzielbar ist, bei der zusätzlich Schwingungsanregungen in der Radaufhängung vermehrt unterdrückbar sind.

Die federnden Mittel sind durch zumindest jeweils ein in Einbaulage federnd vorgespanntes gummielastisches Lenkerlager gebildet sein. Aufgrund der aufgelösten Lenkeranordnung lässt sich auch damit die geforderte Vorspannung in der Radaufhängung bzw. die Verdrehspannung um die Spreizachse mit den aufgeführten Vorteilen herstellen.

Die federnd nachgiebigen Mittel können zusätzlich hydropneumatische Gasdruckfedern sein, die jeweils zwischen dem Aufbau des Kraftfahrzeuges und einem Radaufhängungsteil asymmetrisch zur Spreizachse angeordnet sind. Derartige, teleskopische Gasdruckfedern sind baulich günstig anzuordnen und zuverlässig in ihrer Funktion. Hinsichtlich der Anlenkung am Aufbau des Kraftfahrzeuges kann dies ein mit dem Aufbau verbundener Hilfsrahmen oder unmittelbar der Aufbau sein, wobei ggf. eine bereits vorhandene Anlenkstelle beispielsweise für einen der Lenker der Radaufhängung mitverwendbar ist.

Ferner können die Gasdruckfedern baulich günstig unmittelbar an den Radträgern angelenkt sein. Auch hier können ggf. bereits vorhandene Befestigungsstellen wie beispielsweise für die Bremssättel der hydraulischen Betriebsbremse des Kraftfahrzeuges herangezogen werden. Zudem können die besagten Vorspannkräfte besonders wirksam in die Radaufhängung eingeleitet werden, insbesondere wenn die Gasdruckfedern bei in Fahrtrichtung hinter der Spreizachse der Räder liegenden Spurstangen ebenfalls hinter der besagten Spreizachse am Radträger angreifen.

Eine konstruktiv besonders vorteilhafte Anordnung der Gasdruckfedern ergibt sich, wenn diese in Fahrtrichtung gesehen pfeilförmig schräg zur Fahrzeuglängsmittelachse verlaufen, wobei der aufbauseitige Anlenkpunkt vor der besagten Spreizachse der Räder liegt. Dadurch gelingt es relativ einfach, die Gasdruckfedern vorbei an den bereits vorhandenen Einzellenkern entsprechend der geforderten Geometrie anzuordnen.

Bei einer Vorderachse mit gelenkten und über Antriebswellen angetriebenen Rädern können dabei des weiteren die Gasdruckfedern oberhalb der unteren Lenker und unterhalb der Antriebswellen positioniert sein.

Ausgehend von handelsüblichen und bei Lenkerlagerungen regelmäßig verwendeten Gummi-Metall-Hülsenlagern können diese durch geeignete Verschränkung in der Einbaulage vorgespannt sein. Um die Kennwerte der Hülsenlager nicht zu beeinträchtigen, kann es sich aber als erforderlich zeigen, diese asymmetrisch so zu gestalten, dass bei den einer Kompression unterliegenden Lagerbereichen der Gummihülsen Verdickungen vorgesehen werden; im Querschnitt ähnlich Nockenformen.

Bevorzugt sind die federnd vorgespannten Lenkerlager bei in der oberen Lenkerebene der Radaufhängung angeordneten Spurstangen an den oberen Lenkern vorgesehen. Dies bewirkt u.a. aufgrund der direkten Einleitung der Vorspannkräfte zu den Spurstangen der Lenkung des Kraftfahrzeuges zu einer noch höheren Lenkpräzision.

Schließlich können die federnd vorgespannten Lenkerlager baulich besonders günstig an den aufbauseitigen Anlenkstellen der Lenker angeordnet sein.

Zwei Ausführungsbeispiele der Erfindung sind im Folgenden mit weiteren Einzelheiten näher beschrieben.

Die anliegende schematische Zeichnung zeigt in:
- **Fig. 1**: eine Radaufhängung für die gelenkten Räder einer Vorderachse für Kraftfahrzeuge, mit einer zwischen dem Aufbau und dem Radträger angeordneten Gasdruckfeder; und
- **Fig. 2**: ein zur Erzielung einer inneren Vorspannung in der Radaufhängung gemäß Fig. 1 modifiziert verbautes, aufbauseitiges Lenkerlager in einem Längsschnitt.

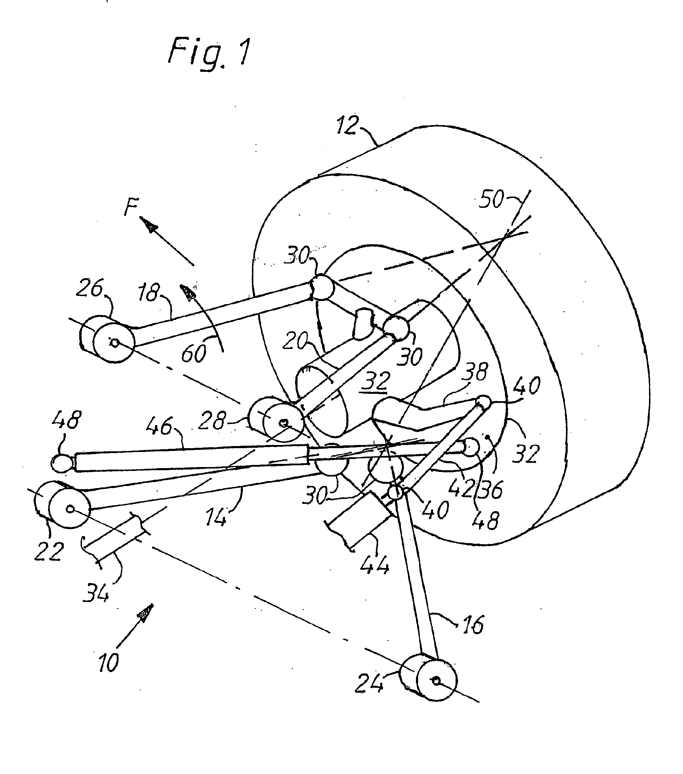

In der **Fig. 1** ist mit 10 eine vordere rechte Radaufhängung für die gelenkten Räder 12 eines nicht dargestellten Kraftfahrzeuges bezeichnet. Die vordere linke Radaufhängung ist sich spiegelbildlich gleich vorzustellen. Es sei bemerkt, dass die Radaufhängung 10 nur insoweit dargestellt und beschrieben ist, als dies für das Verständnis der vorliegenden Erfindung erforderlich ist. Z.B. sind der Stabilisator, die Tragfeder und der Teleskopstoßdämpfer oder ein ähnliches Federglied nicht dargestellt. Die Fahrtrichtung des Kraftfahrzeuges ist mit dem Pfeil F gekennzeichnet.

Die Radaufhängung 10 weist in einer unteren Lenkerebene zwei räumlich entsprechend angeordnete (Einzel-) Lenker 14, 16 und in einer oberen Lenkerebene zwei weitere (Einzel-) Lenker 18, 20 auf.

Die besagten Lenker 14 bis 20 sind über Gummi-Metall-Hülsengelenke 22, 24, 26, 28 schwenkbar am Aufbau (nicht dargestellt) des Kraftfahrzeuges angelenkt. Der Aufbau kann eine Rahmenstruktur oder ein mit dem Aufbau verbundener Hilfsrahmen sein.

Des weiteren sind die Lenker 14 bis 20 über Kugelgelenke (einheitlich mit 30 bezeichnet) mit dem das Rad 12 drehbar lagernden und führenden Radträger 32 gelenkig verbunden.

Eine nur abschnittsweise dargestellte Antriebswelle 34 treibt das Rad 12 des front- oder Allrad-getriebenen Kraftfahrzeuges an. An den Radträger 32 ist in bekannter und nicht dargestellter Weise bei 36 der Bremssattel einer Scheibenbremse der Betriebsbremse des Kraftfahrzeuges angebaut.

Entgegen der Fahrtrichtung F und nach oben geneigt ragt von dem Radträger 32 ein Lenkarm 38 ab, der über Kugelgelenke 40 an einer im wesentlichen in der oberen Lenkerebene etwa quer verlaufenden Spurstange 42 mit einer nur angedeuteten Zahnstangenlenkung 44 trieblich verbunden ist.

Mit Bezug zur nicht dargestellten linken Radaufhängung ist nach vorne pfeilförmig an den Radaufhängungen 10 je eine federnd nachgiebig und schwingungsdämpfend wirkende Gasdruckfeder 46 angeordnet. Die Gasdruckfeder 46 kann hydropneumatischer Bauart sein, wie sie z.B. bei tragenden Stoßdämpfern von Kraftfahrzeugen oder bei Klappenbetätigungen handelsüblich sind.

Die Gasdruckfedern 46 sind einerseits am Aufbau (oder Hilfsrahmen) des Kraftfahrzeuges und andererseits bei 36 im Bereich des Bremssattels über Kugelgelenke 48 angelenkt.

Die Gasdruckfedern 46 verlaufen jeweils vom vorderen unteren Lenkerlager 22 des Lenkers 14 schräg zur Längsachse des Kraftfahrzeuges und entgegen der Fahrtrichtung F oberhalb der durch die unteren Lenker 14, 16 gebildeten Lenkerebene, jedoch unterhalb der Antriebswelle 34 zum Radträger 32. Das korrespondierende Kugelgelenk 48 kann dabei einheitlich an einer Befestigung für den Bremssattel bei 36 festgelegt sein.

In der Draufsicht gesehen liegt der aufbauseitige Anlenkpunkt 48 der Gasdruckfeder 46 vor der gestrichelt eingezeichneten Lenkachse bzw. Spreizachse 50 der Radaufhängung 10, während wie ohne weiteres ersichtlich der radträgerseitige Anlenkpunkt 48 (bei 36) deutlich hinter der im wesentlichen senkrecht verlaufenden Spreizachse 50 liegt. Der Ordnung halber sei erwähnt, dass die besagte Spreizachse 50 wie bekannt die Schnittpunkte der gedachten Verlängerungen der Verbindungsgeraden der Lenker 14, 16 und 18, 20 schneidet und somit die virtuelle Lenkachse des Kraftfahrzeuges bildet, um die die gelenkten Räder 12 bei Lenkbewegungen schwenken.

Die von den Gasdruckfedern 46 ausgeübten Vorspannkräfte (die natürlich bei Geradeausfahrt gleich stark sein müssen) prägen den Radträgern 32 ein Drehmoment um die Spreizachse 50 in Richtung Vorspur der Räder 12 auf. Aufgrund der beschriebenen Anordnung heben sich diese Vorspannkräfte als innere Kraft auf und werden über die Spurstangen 42 und die Zahnstangenlenkung 44 abgestützt.

Unabhängig davon bewirkt diese Vorspannung einen Spielausgleich in den beschriebenen Kugelgelenken 32 und 40 und damit verbunden eine verbesserte Ansprechempfindlichkeit und Lenkpräzision.

Ferner wird eine verbesserte Lenkungsrückstellung in die Geradeausfahrt erzielt, weil die bei Lenkeinschlag teleskopisch einfahrende Gasdruckfeder 46 (z.B. bei einer Rechtskurve die dargestellte rechte Gasdruckfeder 46) eine höhere Vorspannkraft ausübt als die gegenüberliegende, teleskopisch ausfahrende Gasdruckfeder 46.

Schließlich bewirken die in bekannter Weise eine hydraulische Dämpfungseinrichtung aufweisenden Gasdruckfedern 46 eine zusätzliche Schwingungsdämpfung in den Radaufhängungen 10, so dass eine derartige Radaufhängung laufruhiger ist und noch geringere Störeinflüsse von der Fahrbahn und/oder den rotierenden Massen erfährt.

Als federnde Mittel sind gemäß der Erfindung entsprechend in der Einbaulage vorgespannte Lenkerlager 22 bis 28 vorgesehen, die so konstruiert und/oder verbaut werden, dass sie zumindest mittelbar eine Vorspannung um die Spreizachse 50 wie vorbeschrieben ausüben.

Diese Vorspannung ist in der **Fig. 1** anhand des oberen, vorderen Lenkers 18 mit dem Pfeil 60 angezeigt.

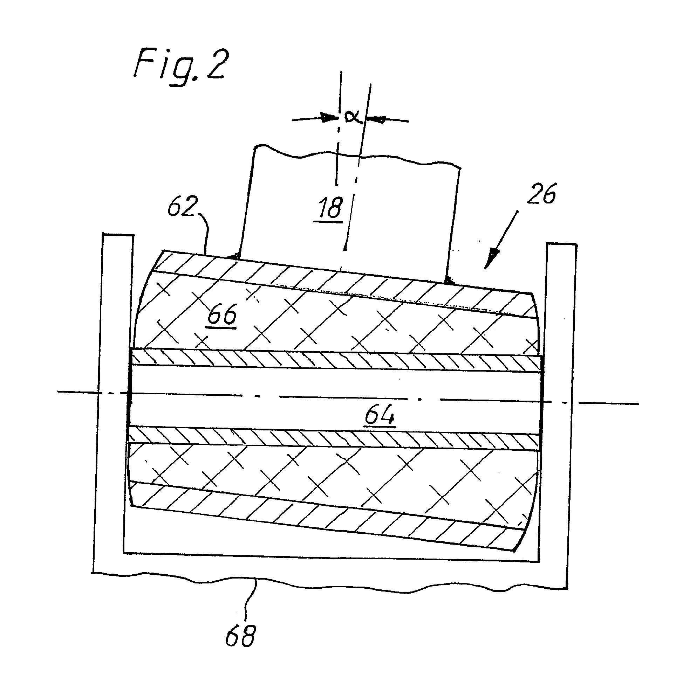

Das entsprechende Lenkerlager 26 zeigt die **Fig. 2****.** Das Lenkerlager ist ein Gummi-Metall-Hülsenlager an sich bekannter Konstruktion.

Es weist ein äußeres, fest mit dem Lenker 18 verschweißtes Lenkerauge 62, eine innere Metallhülse 64 und eine dazwischen liegende, ringförmige Gummibüchse 66 auf.

Das Lenkerlager 26 wird in eine nur teilweise dargestellte, aufbauseitige Konsole 68 eingesetzt und deren innere Metallhülse 64 mittels einer durchgehenden Schraube (nicht dargestellt) an der Konsole 68 befestigt.

Abweichend zum Stand der Technik ist das Lenkerauge 62 um einen Winkel α versetzt derart schräg an den Lenker 18 angeschweißt, dass es in der Einbaulage des Lenkers 18 (definiert durch die räumliche Anordnung der Lenker 18 bis 24 und der Spurstange 42) eine Verkantung oder Verschränkung mit der aus der Zeichnung **Fig. 2** ersichtlichen Schiefstellung bzw. asymmetrischen Verformung der Gummibüchse 66 bewirkt. Damit im Fahrbetrieb keine unerwünschten Reibungen zwischen der Konsole 68 und dem Lenkerlager 26 auftreten können, sind die Stirnflächen der Gummibüchse 66 und insbesondere des Lenkerauges 62 wie ersichtlich ballig ausgeführt.

Die beschriebene Verschränkung der Lenkerlager 26 erzeugt ein Drehmoment gemäß dem Pfeil 60 in der **Fig. 1** auf die Lenker 18 (gesehen auf beide Radaufhängungen 10) bzw. mittelbar auf die Radträger 32, das sich wiederum über die Spurstangen 42 und die Zahnstangenlenkung 44 als innere Kraft abstützt. Diese Verspannung erzeugt wiederum die um die Spreizachse 50 wirkende Vorspannung an den beschriebenen Kugelgelenken 30 bzw. 40.

Die Erfindung ist nicht auf die beschriebenen Ausführungsbeispiele beschränkt. So können die dargestellten Gasdruckfedern 46, sofern sich dies baulich darstellen lässt, auch quer zur Fahrtrichtung F des Kraftfahrzeuges oder in einer anderen Ausrichtung angeordnet sein.

Anstelle eines Lenkerlagers 26 können auch mehrere Lenkerlager 22 bis 28 entsprechend vorgespannt verbaut sein. Als erfindungswesentlich ist anzusehen, dass die federnden Mittel keine reinen Rückstellkräfte auf die Lenkung des Kraftfahrzeuges ausüben (z.B. innerhalb des Lenkgetriebes), sondern als innere Kraft die beschriebenen Gelenke 30, 40 unter Vorspannung halten.

Anstelle des beschriebenen Versatzes (Winkel α) des Lenkerauges 62 zum Lenker 18 (symmetrische Konstruktion des Lenkerlagers 26) kann auch die Metallhülse 64 relativ zum Lenkerauge 62 versetzt sein (asymmetrische Konstruktion).

Die Radaufhängung 10 kann auch nur in einer Lenkerebene, also oben oder unten, mit aufgelösten (Einzel-) Lenkern versehen sein. Ferner kann anstelle einer Radaufhängung 10 mit gelenkten Rädern auch eine Hinterradaufhängung mit nur eine definierte Eigenlenkung aufweisenden Rädern der Radaufhängung mit den beschriebenen Merkmalen versehen sein. Die Spurstangen sind bei einer derartigen Radaufhängung ohne ein dazwischen geschaltetes Lenkgetriebe ebenfalls am Aufbau oder Hilfsrahmen des Kraftfahrzeuges angelenkt.

## Patentansprüche

1. Radaufhängung für die Räder einer Achse eines Kraftfahrzeuges, insbesondere für die gelenkten Vorderräder, mit die Räder drehbar lagernden Radträgern, die über mehrere am Aufbau des Kraftfahrzeuges angelenkte Einzellenker und je eine Spurstange zur Bildung einer Geradführung angeordnet sind, wobei federnd nachgiebige Mittel (26) in der Radaufhängung (10), die den Radträgern (32) mittelbar oder unmittelbar eine um die Spreizachse (50) der Räder (12) und gegensinnig wirkende Vorspannung aufprägen, **dadurch gekennzeichnet, dass** die federnden Mittel durch zumindest jeweils ein in Einbaulage federnd vorgespanntes gummielastisches Lenkerlager (26) gebildet sind.

2. Radaufhängung nach Anspruch 1, **dadurch gekennzeichnet, dass** die federnden Mittel (46; 26) die Räder (12) des Kraftfahrzeuges in Richtung Vorspur oder Nachspur vorspannen.

3. Radaufhängung nach Anspruch 1 oder 2, **dadurch gekennzeichnet, dass** die Mittel (46; 26) zusätzlich schwingungsdämpfend wirken.

4. Radaufhängung nach einem der Ansprüche 1 bis 3, **dadurch gekennzeichnet, dass** die Mittel weiter hydropneumatische Gasdruckfedern (46) aufweisen, die jeweils zwischen dem Aufbau des Kraftfahrzeuges und einem Radaufhängungsteil (32; 18) asymmetrisch zur Spreizachse (50) angeordnet sind.

5. Radaufhängung nach Anspruch 4, **dadurch gekennzeichnet, dass** die Gasdruckfedern (46) unmittelbar an den Radträgern (32) angelenkt sind.

6. Radaufhängung nach Anspruch 4 oder 5, **dadurch gekennzeichnet, dass** die Gasdruckfedern (46) bei in Fahrtrichtung (F) hinter der Spreizachse (50) der Räder (12) liegenden Spurstangen (42) ebenfalls hinter der besagten Spreizachse (50) am Radträger (32) angreifen.

7. Radaufhängung nach einem der Ansprüche 1 bis 6, **dadurch gekennzeichnet, dass** die Gasdruckfedern (46) schräg zur Fahrzeuglängsachse verlaufen und dass der aufbauseitige Anlenkpunkt (48) vor der besagten Spreizachse (50) der Räder (12) liegt.

8. Radaufhängung nach einem der Ansprüche 1 bis 7, **dadurch gekennzeichnet, dass** bei einer Vorderachse mit gelenkten und über Antriebswellen (34) angetriebenen Rädern (12) die Gasdruckfedern (46) oberhalb der unteren Lenker (14, 16) und unterhalb der Antriebswellen (34) positioniert sind.

9. Radaufhängung nach einem der vorhergehenden Ansprüche 1 bis 8, **dadurch gekennzeichnet, dass** die federnd vorgespannten Lenkerlager (26) entsprechend ausgebildete Gummi-Metall-Hülsenlager (62, 64, 66) mit symmetrischer oder asymmetrischer Konfiguration sind.

10. Radaufhängung nach einem der Ansprüche 1 bis 9, **dadurch gekennzeichnet, dass** die federnd vorgespannten Lenkerlager (26) bei in der oberen Lenkerebene (18, 20) der Radaufhängung (10) angeordneten Spurstangen (42) an zumindest einem oberen Lenker (18) vorgesehen sind.

11. Radaufhängung nach einem der Ansprüche 1 bis 10, **dadurch gekennzeichnet, dass** die federnd vorgespannten Lenkerlager (26) an den aufbauseitigen Anlenkstellen der Lenker (18) angeordnet sind.

## Claims

1. Wheel suspension for the wheels of an axle of a motor vehicle, in particular for the steered front wheels, comprising wheel carriers which rotatably bear the wheels, and are arranged by means of a plurality of individual links which are coupled to the body of the motor vehicle and one track rod each to create straight-line steering, resiliently flexible means (26) in the wheel suspension (10) indirectly or directly applying to the wheel carriers (32) prestress which acts around the expansion axis (50) of the wheels (12) in opposite directions, **characterised in that** the resilient means are formed by at least one rubber-elastic link bearing (26) each which is resiliently prestressed in the installation position.

2. Wheel suspension according to claim 1, **characterised in that** the resilient means (46; 26) prestress the wheels (12) of the motor vehicle in the toe-in or toe-out direction.

3. Wheel suspension according to either claim 1 or claim 2, **characterised in that** the means (46; 26) additionally act to damp vibrations.

4. Wheel suspension according to any of claims 1 to 3, **characterised in that** the means further comprise hydropneumatic gas springs (46) which are each arranged between the body of the motor vehicle and a wheel suspension part (32; 18), asymmetrical to the expansion axis (50).

5. Wheel suspension according to claim 4, **characterised in that** the gas springs (46) are coupled directly to the wheel carriers (32).

6. Wheel suspension according to either claim 4 or claim 5, **characterised in that**, in the case of track rods (42) lying behind the expansion axis (50) of the wheels (12) in the direction of travel (F), the gas springs (46) likewise act on the wheel carrier (32) behind said expansion axis (50).

7. Wheel suspension according to any of claims 1 to 6, **characterised in that** the gas springs (46) extend obliquely to the longitudinal axis of the vehicle and **in that** the body-side coupling point (48) lies in front of said expansion axis (50) of the wheels (12).

8. Wheel suspension according to any of claims 1 to 7, **characterised in that**, in the case of a front axle with steered wheels (12) driven by means of drive shafts (34), the gas springs (46) are positioned above the lower links (14, 16) and underneath the drive shafts (34).

9. Wheel suspension according to any of claims 1 to 8, **characterised in that** the resiliently prestressed link bearings (26) are correspondingly designed rubber-metal sleeve bearings (62, 64, 66) having a symmetrical or asymmetrical configuration.

10. Wheel suspension according to any of claims 1 to 9, **characterised in that** the resiliently prestressed link bearings (26) are provided on at least one upper link (18) when track rods (42) are located in the upper link plane (18, 20) of the wheel suspension (10).

11. Wheel suspension according to any of claims 1 to 10, **characterised in that** the resiliently prestressed link bearings (26) are located on the body-side coupling points of the links (18).

## Revendications

1. Suspension de roues pour les roues d'un essieu d'un véhicule automobile, en particulier pour les roues directrices avant, avec des supports de roue montant à rotation les roues, lesquels supports sont aménagés sur plusieurs bielles individuelles articulées sur la structure du véhicule automobile et respectivement une barre d'accouplement pour former une glissière, dans laquelle des moyens élastiques (26) disposés dans la suspension de roues (10) appliquent aux supports de roues (32) directement ou indirectement une précontrainte agissant autour de l'essieu expansible (50) des roues (12) et à contre-sens, **caractérisée en ce que** les moyens élastiques sont formés par au moins, respectivement, un palier de bielle (26) avec l'élasticité du caoutchouc précontraint de manière élastique en position de montage.

2. Suspension de roues selon la revendication 1, **caractérisée en ce que** les moyens élastiques (46 ; 26) pré-contraignent les roues (12) du véhicule automobile dans le sens d'un pincement des roues avant ou d'une ouverture des roues.

3. Suspension de roues selon la revendication 1 ou la revendication 2, **caractérisée en ce que** les moyens (46 ; 26) assurent en outre un amortissement des vibrations.

4. Suspension de roues selon l'une quelconque des revendications 1 à 3, **caractérisée en ce que** les moyens présentent encore des ressorts à pression de gaz hydropneumatiques (46) qui sont aménagés respectivement entre la structure du véhicule automobile et une partie de suspension de roues (32 ; 18) de manière asymétrique par rapport à l'essieu expansible (50).

5. Suspension de roues selon la revendication 4, **caractérisée en ce que** les ressorts à pression de gaz (46) sont articulés directement sur les supports de roues (32).

6. Suspension de roues selon la revendication 4 ou la revendication 5, **caractérisée en ce que** les ressorts à pression de gaz (46) qui se trouvent dans les barres d'accouplement (42) situées dans le sens de conduite (F) derrière l'essieu expansible (50) des roues (12) s'engagent également derrière ledit essieu expansible (50) sur le support de roues (32).

7. Suspension de roues selon l'une quelconque des revendications 1 à 6, **caractérisée en ce que** les ressorts à pression de gaz (46) s'étendent en oblique par rapport à l'axe longitudinal du véhicule et **en ce que** le point d'articulation (48) côté structure se situe devant ledit essieu expansible (50) des roues (12).

8. Suspension de roues selon l'une quelconque des revendications 1 à 7, **caractérisée en ce que**, dans le cas d'un essieu avant avec des roues (12) directrices entraînées via des arbres d'entraînement (34), les ressorts à pression de gaz (46) sont positionnés au-dessus des bielles inférieures (14, 16) et en dessous des arbres d'entraînement (34).

9. Suspension de roues selon l'une quelconque des revendications 1 à 8, **caractérisée en ce que** les paliers de bielles (26) précontraints de manière élastique sont des supports à douilles (62, 64, 66) de caoutchouc et de métal de conformation correspondante et à configuration symétrique ou asymétrique.

10. Suspension de roues selon l'une quelconque des revendications 1 à 9, **caractérisée en ce que** les paliers de bielles (26) à précontrainte élastique sont prévus, dans les barres d'accouplement (42) aménagées dans le plan supérieur (18, 20) des bielles de la suspension de roues (10) sur au moins une bielle supérieure (18).

11. Suspension de roues selon l'une quelconque des revendications 1 à 10, **caractérisée en ce que** les paliers de bielles à précontrainte élastique (26) sont aménagés sur les points d'articulation côté structure des bielles (18).
